(19) Europäisches Patentamt

European Patent Office

Office européen des brevets

(11) **EP 0 641 640 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(51) Int. Cl.$^6$: **B29C 47/40**, B29B 7/48

(21) Anmeldenummer: **94112400.0**

(22) Anmeldetag: **09.08.1994**

(54) **Schneckenelement für eine Schneckenmaschine**

Screw element for screw machine

Elément de vis-sans-fin pour une machine à vis-sans-fin

(84) Benannte Vertragsstaaten:
**BE DE FR GB IT LU NL**

(30) Priorität: **02.09.1993 DE 4329612**

(43) Veröffentlichungstag der Anmeldung:
**08.03.1995 Patentblatt 1995/10**

(73) Patentinhaber:
**Krupp Werner & Pfleiderer GmbH
70469 Stuttgart (DE)**

(72) Erfinder:
• **Weihrich, Gerhard
D-75428 Illingen (DE)**

• **Wiedmann, Werner, Dr.
D-70499 Stuttgart (DE)**

(74) Vertreter:
**Schneck, Herbert, Dipl.-Phys., Dr. et al
Rau, Schneck & Hübner
Patentanwälte
Königstrasse 2
90402 Nürnberg (DE)**

(56) Entgegenhaltungen:
EP-A- 0 159 220      EP-A- 0 537 701
DE-A- 2 822 778      DE-B- 1 004 312
DE-B- 1 035 890      FR-A- 1 048 701
FR-A- 2 328 722      GB-A-   N2 064
US-A- 4 714 350

**Beschreibung**

Die Erfindung richtet sich auf ein Schneckenelement für die Aufbereitung und/oder Verarbeitung von Kunststoffen oder Elastomeren in einer Schneckenmaschine mit gleichsinnig antreibbaren Schnecken-Wellen und zumindest einem Paar ineinander greifender Schneckenelemente, wobei jedes Schneckenelement einen Schneckensteg aufweist, dessen Hüllkurve sich radial mit konstantem Abstand von der jeweiligen Welle wegerstreckt und in Längsrichtung linear parallel zu der Längsachse der Welle verläuft, wobei ein radial außen liegender, gehäusenaher Abschnitt des Schneckensteges parallel zu der Gehäuseinnenwand mit geringem Spiel gegenüber dieser verläuft.

Eine derartige aus der DE-AS 20 52 480 bekannte Vorrichtung dient als Mischvorrichtung zum Entfernen flüchtiger Bestandteile aus viskosen Massen, wobei zwei Mischrotoren vorgesehen sind, die gleichsinnig angetrieben sind und axial gerichtete, linear verlaufende, paddelförmige Mischflügel aufweisen, durch die eine gute Entgasung des Mischgutes zum Abführen flüchtiger Bestandteile erzielt werden soll. Der Gehäuseteil, der von den Mischflügeln eingenommen wird, bildet die Misch- oder Reaktionszone.

In der DE-PS 862 668 wird eine Knetvorrichtung beschrieben, welche zwei gleichsinnig angetriebene Wellen mit Knetschnecken aufweist. Diese Knetschnecken durchsetzen das Gehäuse durchgehend über den gesamten Förderbereich und sind eingängig ausgebildet, d.h. sie erstrecken sich von der Welle radial asymmetrisch in nur einer Richtung weg.

Die DE-OS 30 11 918 beschreibt einen Fließmischer mit aufeinanderfolgenden Misch-Schnecken und Misch-Schaufeln, welche an gegensinnig angetriebenen Wellen angeordnet sind. Bei dieser Vorrichtung soll eine gleichmäßige Vermischung erreicht werden und darüber hinaus sollen Inhomogenitäten bei Polyolefin-Harz-Filmen vermieden werden.

Die DE-PS 949 162 betrifft ein Schnecken-Knetwerk, wobei an gegensinnig drehenden Wellen Stauelemente in Form von gegenläufig drehenden Schneckenwindungen ausgebildet sind.

Aus der EP-PS 0 160 124 ist ein Gleichdrall-Doppelschneckenkneter mit Knetscheiben bekannt, der einzelne Knetbereiche mit förderwirksamen, versetzten Knetscheiben aufweist. Die einzelnen Knetscheiben sind mit einem relativ schmalen Kamm versehen, der mit einem möglichst geringen Spiel gegenüber der Gehäusewand arbeiten soll. Die Knetelemente bei diesem Doppelschneckenkneter sind als in axialer Richtung relativ kurze Knetscheiben ausgebildet, wobei die Kämme in axialer Richtung linear verlaufen, d.h. in sich keinen Drall aufweisen. Lediglich die Kämme aufeinan-derfolgender Knetscheiben können gegeneinander win-kelversetzt angeordnet sein.

DE-B-1 004 312 betrifft eine Vorrichtung zum Spalten und/oder Vergasen von Kohlenwasserstoffen.

Das Schneckenprofil dieser Vorrichtung ist zweigängig ausgebildet und weist einen etwa linsenförmigen Querschnitt auf. Derartige zweigängige Dichtprofile machen es erforderlich, daß Steigung und Steigungsrichtung gleich sein müssen.

Aus FR-A-1 048 701 ist eine Konstruktion bekannt, bei der die Schneckenelemente leicht gedrehte Stege aufweisen. Die Schnecken sind gegenläufig, zweigängig ausgebildet.

Der Erfindung liegt die Aufgabe zugrunde, eine Vorrichtung der eingangs genannten Art so auszugestalten, daß sich die Vorteile von tangierenden gegenläufigen Knetern in Form einer Umschichtung des Mischgutes und einer geringen Anhäufung von Spannungsspitzen mit den vorteilhaften Wirkungen von gleichsinnig ineinandergreifenden Systemen, wie beispielsweise der Selbstreinigung dieser Systeme, kombinieren lassen.

Insbesondere soll ein schonendes Umschichten und Scheren ohne Spannungsspitzen mit starker Axial- und Quervermischung in einem definierten Volumen erreicht werden, wodurch beispielsweise ein temperaturschonendes, gleichmäßiges und stippenfreies Plastifizieren von Polyolefinpulvern mit breiten oder bimodalen Molekulargewichtsverteilungen erreicht werden kann.

Diese Aufgabe wird erfindungsgemäß dadurch gelöst, das Schneckenelement (1) eingängig ausgebildet ist und einen annähernd birnenförmigen Querschnitt aufweist, daß daß die Hüllkurve einen dieser gegenüber schmäleren Schaufelsteg derart einschließt, daß dessen Schaufelkamm ausgehend von dem einen axialen Ende des Schneckenelements und der einen, ersten in Umfangsrichtung äußeren Seite des gehäusenahen Abschnitts der Hüllkurve sich in Umfangsrichtung gesehen über einen Teil des gehäusenahen Abschnitts der Hüllkurve und in axialer Richtung hin auf die in Umfangsrichtung zweite äußere Seite des gehäusenahen Abschnitts der Hüllkurve zu erstreckt.

Mit anderen Worten kann man sich ein erfin-dungsgemäßes Schneckenelement dadurch entstan-den denken, daß ein Schneckenelement mit einem Schneckensteg, wie er als Mischflügel aus der DE-AS 20 52 480 oder im Schnitt aus Fig. 3 der DE-PS 862 668 bekannt ist, unter Ausbildung des Schaufelsteges auf beiden Seiten abgetragen wird, so daß ein relativ schmaler Schneckensteg entsteht, wobei an der radialen Außenseite ein Schaufelkamm verbleibt, der sich parallel und in geringem Abstand zur Gehäuseinnenwand erstreckt und in axialer Richtung gesehen eine Steigung aufweist. Dementsprechend kann man sich also vorstellen, daß aus einem an sich geradlinig verlaufenden Schneckensteg bzw. aus der gedachten Hüllkurve eines solchen Schneckensteges ein im Winkel zur Längsachse der Welle verlaufender Schaufelsteg herausgearbeitet ist, so daß der Umfangsbereich, längs dessen sich benachbarte Schneckenelemente wechselseitig und die Gehäuseinnenwand abstreifen, gegenüber den gattungsgemäß als bekannt vorausgesetzten Schneckenstegen vermindert wird.

Hierdurch wird erreicht, daß innerhalb des gehäusenahen Hüllkurvenbereiches eine schraubenförmige Konfiguration des Schaufelkammes realisierbar ist, ohne daß die Gefahr besteht, daß eine Kollision mit dem Schneckenelement auf der jeweils anderen Welle eintreten kann. Dementsprechend können rechts- und links-steigende Elemente miteinander im Eingriff stehen, ebenso wie Elemente mit ungleichen Steigungen. Das Radialspiel zum Gehäuse kann abgestimmt werden auf das jeweilige Verfahren, um eine schonende Scherung zu erreichen. Die Axial- und Quervermischung kann durch die Wahl der Steigung bzw. Steigungskombinationen unterschiedlicher Schneckenelemente vorgegeben werden. Die Länge der Mischzone ist leicht veränderbar, wobei der Gehäusedurchmesser in der Mischzone der gleiche sein kann wie in der übrigen Schneckenmaschine. Durch die schmäleren Schaufelstege im Vergleich zu den herkömmlichen Schneckenstegen wird eine vergrößerte spezifische Verweilzeit im Vergleich zu herkömmlichen Lösungen erreicht. Die Temperierung der Mischzone kann über die Gehäusewand erfolgen. Die Elemente bzw. die Schaufelkämme streifen mit dem vorgegebenen Spiel die Gehäusewand ab. Es ist die Realisierung mehrerer Mischzonen in ein und demselben Extruder möglich.

Ein erfindungsmäßes Schneckenelement eignet sich insbesondere für die Plastifizierung und Homogenisierung von Polyolefinen mit bimodaler oder breiter Molekulargewichtsverteilung. Dabei enthält das den Polymerisationsreaktor verlassende Pulver Zonen mit nieder- und hochviskos aufschmelzenden Polyolefinen. Diese müssen in der nachfolgenden zweiwelligen (oder auch mehrwelligen), gleichsinnig drehenden Schneckenmaschine homogen vermischt werden. Dabei ist es insbesondere wichtig, daß gleichmäßig und schonend Scher- und Dehnspannungen über einen längeren Zeitraum gleichmäßig in das Produkt eingebracht werden. Spannungsspitzen, wie sie herkömmlicherweise im Zwickel zwischen den beiden Schnecken auftreten, führen zu Inhomogenitäten und müssen vermieden werden, was durch die erfindungsgemäße Konfiguration erreicht wird, weil demnach großvolumig über Verweilzeit und Dehnströmungen im Schaufel-Keilspalt eine Misch- und Dehnwirkung erzielt wird, die sich grundsätzlich von Strömungen in herkömmlichen ineinandergreifenden, kontinuierlich arbeitenden Schneckenmaschinen unterscheidet. Eine weitere wichtige Anwendung für dieses Schneckenelement ist die Herstellung von Polymer-Blends aus nieder- und hochviskosen Polymeren.

In weiterer Ausgestaltung der Erfindung kann insbesondere vorgesehen sein, daß die Steigung in axialer Richtung des Schaufelkammes in Umfangsrichtung gesehen entsprechend einem Winkel φ von ca. 90° beträgt. Günstigerweise kann die Breite des Schaufelkammes in Umfangsrichtung des Winkels φ gesehen etwa 1/5 des gehäusenahen Abschnitts der Hüllkurve betragen.

Um die erfindungsgemäßen Schneckenelemente dem jeweiligen Anwendungszweck entsprechend einsetzen zu können, kann vorgesehen sein, daß sie auf die Welle mittels einer Nut- und Federverbindung drehfest aufsteckbar sind.

Die Nut- und Federverbindungen können so ausgestaltet sein, daß die Schneckenelemente einer Welle oder benachbarter Wellen relativ zueinander in unterschiedlichen Winkelstellungen aufsteckbar sind. Es ist dementsprechend möglich, längs einer Welle aufeinanderfolgende Schneckenelemente gegeneinander winkelversetzt anzuordnen und auch relativ zu den benachbarten Schneckenelementen auf der anderen Welle beliebige Konfigurationen zu realisieren. Hierdurch kann beispielsweise eine Aufteilung des Produktstromes in Achsrichtung aufgrund eines stufenartigen Versatzes der Schneckenelemente in axialer Richtung zueinander erzielt werden.

Insbesondere kann es günstig sein, daß benachbarte Schneckenelemente derart auf benachbarte Wellen aufschiebbar sind, daß die Steigungsrichtung des Schaufelkammes der benachbarten Schneckenelemente entgegengesetzt (links-steigend bzw. rechts-steigend) ist.

Die Geometrie des Schneckenelements kann günstigerweise so getroffen werden, daß die Steigung etwa das 3,33-fache oder etwa das 6,67-fache des Schnecken-Durchmessers beträgt. Die Länge des Schneckenelements entspricht mit Vorteil etwa dem Schnecken-Durchmesser.

Im Sinne einer nahezu beliebigen Zuordnungsmöglichkeit der einzelnen Schneckenelemente zueinander richtet sich die Erfindung auf eine Schneckenwelle mit einer Mehrzahl von Schneckenelementen, wobei vorgesehen ist, daß nacheinander Schneckenelemente mit unterschiedlicher Steigung des Schaufelkammes angeordnet sind. In diesem Zusammenhang kann vorgesehen sein, daß zur Ausbildung einer asymmetrischen Mischzone auf einer ersten Welle zwei Schneckenelemente mit links-steigendem Schaufelkamm und ein Schneckenelement mit rechtssteigendem Schaufelkamm und auf einer anderen Schneckenwelle korrespondierend zugeordnet ein Schneckenelement mit rechts-steigendem und zwei Schneckenelemente mit links-steigendem Schaufelkamm axial nacheinander angeordnet sind.

Alternativ kann vorgesehen sein, daß die Schneckenelemente in ihrer axialen Abfolge jeweils um einen bestimmten Winkelbetrag gegen das jeweils vorhergehende Schneckenelement versetzt sind.

Weiterhin kann vorgesehen sein, daß die Schneckenelemente der ersten Welle mit einer Steigung entsprechend der Förderrichtung und die Schneckenelemente der zweiten Welle mit einer Steigung in Gegenförderrichtung ausgebildet sind.

Nachfolgend wird die Erfindung anhand eines bevorzugten Ausführungsbeispiels in Verbindung mit der Zeichnung näher erläutert. Dabei zeigen:

Fig. 1 — eine schematische perspektivische Ansicht von zwei nebeneinander auf zwei gleichsinnig drehangetriebenen Wellen angeordneten Schneckenelementen,

Fig. 2 — einen Schnitt entsprechend etwa der Ansicht von der Stirnseite zur Veranschaulichung der geometrischen Verhältnisse,

Fig. 3 — eine Fig. 1 entsprechende perspektivische Darstellung von je drei auf einer Welle axial hintereinander angeordneten Schneckenelementen,

Fig. 4a bis 4d — schematische Schnittdarstellungen längs der Linien a bis d in Fig. 3,

Fig. 5 — eine schematische Darstellung einer Schneckenmaschine, in der die erfindungsgemäßen Schneckenelemente zum Einsatz kommen können und

Fig. 6 — eine schematische Darstellung der Abfolge der verschiedenen Knet- und Mischelemente auf den beiden Wellen einer zweiwelligen Schneckenmaschine unter Verwendung erfindungsgemäßer Schneckenelemente.

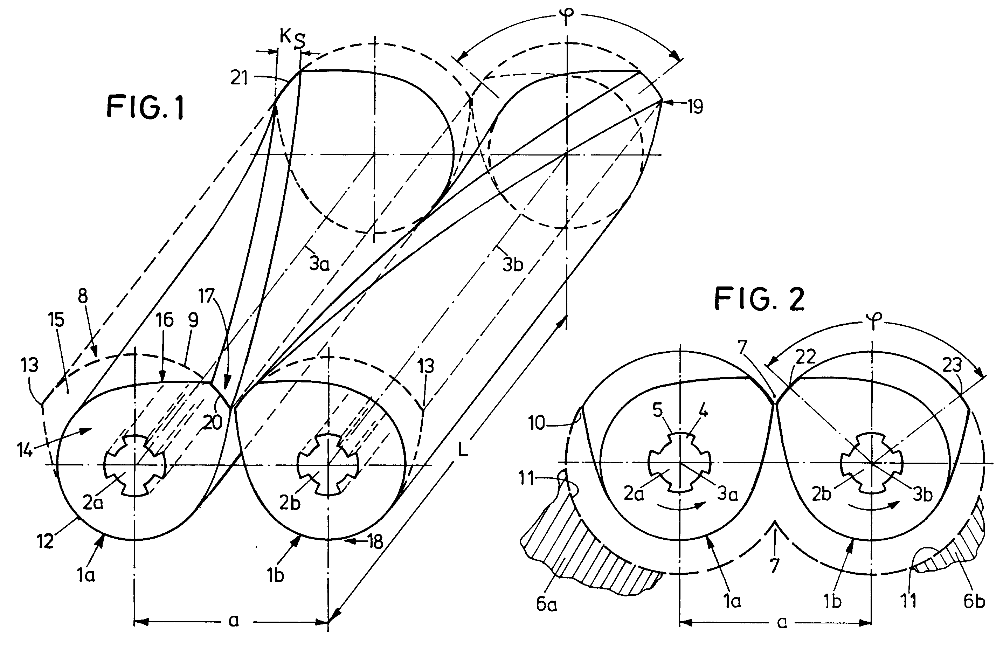

In Fig. 1 sind zwei erfindungsgemäße Schneckenelemente 1 dargestellt, wobei das in der Zeichnung linke Schneckenelement 1a auf einer ersten Welle 2a und das in der Zeichnung rechte Schneckenelement 1b auf einer Welle 2b angeordnet ist, wobei die Längsachsen 3a, 3b der Wellen 2 in einem Abstand a parallel zueinander verlaufen.

Wie in Fig. 2 angedeutet, sind die Schneckenelemente 1 auf die Wellen 2 mittels längs verlaufender Vorsprünge 4 an den Wellen 2 bzw. korrespondierender Ausnehmungen 5 an den Schneckenelementen 1 in Längsrichtung aufschiebbar, aber drehfest befestigt. Jedes Schneckenelement 1 weist in axialer Richtung eine Erstreckung L auf.

Jedes Schneckenelement 1 ist in einem kreisabschnittförmigen Gehäuse 6 angeordnet, wobei die Gehäuseabschnitte 6a, 6b einander unter Ausbildung von Zwickeln 7 schneiden.

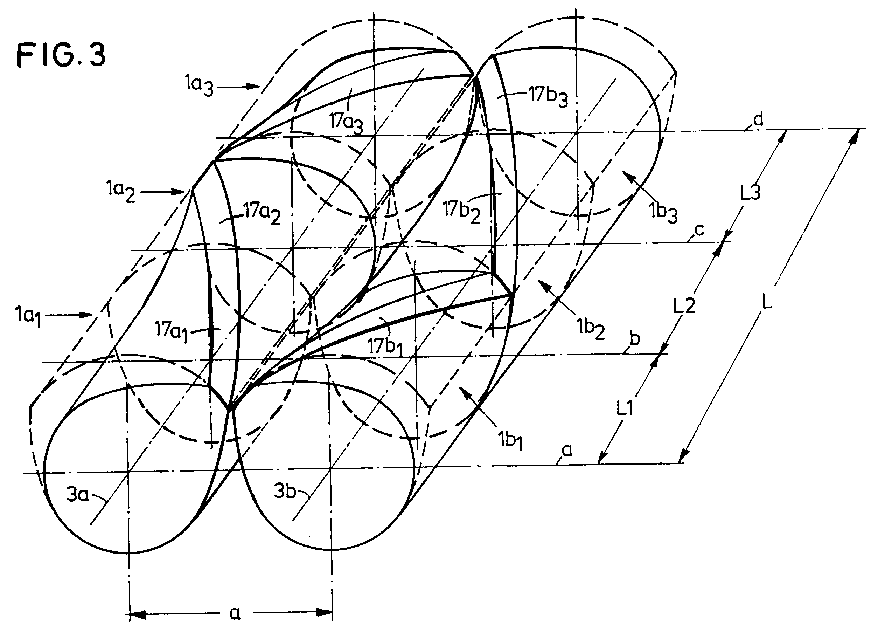

In Fig. 1 ist gestrichelt jeweils eine Hüllkurve 8 eingezeichnet, welche der Außenkontur von aus dem Stand der Technik bekannten Schneckenelementen entsprechend beispielsweise der Fig. 3 der DE-PS 862 668 entspricht. Diese Hüllkurve 8 weist einen gehäusenahen Abschnitt 9 auf, dessen Krümmung im wesentlichen der Krümmung des Gehäuses 6 entspricht und mit geringem Spiel (in Fig. 2 bei 10 angedeutet) gegenüber der Gehäuseinnenwand 11 verläuft. Ein zweiter Hüllkurvenabschnitt 12 umgibt die den jeweiligen Drehmittelpunkt definierende Längsachse 3 und geht längs einer Begrenzungslinie 13 in den ersten Hüllkurvenabschnitt 9 über. Der zweite Hüllkurvenabschnitt 12 verläuft mit Ausnahme des Übergangsbereiches zum ersten Hüllkurvenabschnitt 9 mit einem vorgegebenen Abstand zur Gehäuseinnenwand 11.

Die neue, erfindungsgemäße Konfiguration kann man sich als aus dem herkömmlichen, der Hüllkurve 8 entsprechenden Profil durch Wegnahme von Material herausgearbeitet denken und zwar wie folgt:

Das herkömmliche Profil weist einen Schneckensteg 14 auf, der im wesentlichen durch den obersten Teil des Hüllkurvenabschnitts 12 und den Hüllkurvenabschnitt 9 gebildet wird. Von diesem Schneckensteg muß man sich im Bereich 15 Material entfernt denken, so daß ein Schaufelsteg 16 entsteht, der sich von der Mittellängsachse 3 in radialer Richtung hin auf die Gehäuseinnenwand 11 zu erstreckt.

Dieser so gebildete Schaufelsteg 16 weist einen radial äußeren Abschnitt, einen Schaufelkamm 17, auf. Die Breite $K_S$ des Schaufelkamms 17 bzw. der entsprechende in Umfangsrichtung verlaufende Abschnitt ist ein Teil des Hüllkurvenabschnitts 9 und seine Erstreckung in Umfangsrichtung liegt etwa bei einem Fünftel der Erstreckung in Umfangsrichtung des Hüllkurvenabschnitts 9.

Der Schaufelkamm 17 verläuft in Längsrichtung von dem vorderen Ende 18 zu dem hinteren Ende 19 jedes Schneckenelements 1 mit einer

$$\text{Steigung} = \frac{360}{\phi} \cdot L.$$

Bei einem Umfangswinkel $\phi > 0$ verläuft der Schaufelkamm 17 schräg zu der jeweiligen Längsachse 3. Dabei erstreckt sich der Schaufelkamm 17 von dem einen äußeren Endbereich 20 des gehäusenahen Hüllkurvenabschnitts 9 auf den in Umfangsrichtung gesehen anderen äußeren Abschnitt 21 des gehäusenahen Hüllkurvenabschnitts 9 zu, im Ausführungsbeispiel derart, so daß ein Umfangswinkel $\phi$ von etwa 90° entsprechend der Steigung über die lange L jedes Schneckenelements 1 überbrückt wird. Der Schaufelkamm 17 kann dabei links-steigend verlaufen, wie beim Schneckenelement 1a in Fig. 1 oder rechts-steigend, wie beim Schneckenelement 1b in Fig. 1.

Wie Fig. 2 zeigt, ergibt sich die Steigung des Schaufelkamms 17 über den Umfangswinkel $\phi$ gemessen vom Mittelpunkt 22 des Schaufelkamms 17 am einen Schneckenende 18 zum Mittelpunkt 23 des Schaufelkamms 17 am anderen Schneckenende 19.

In Fig. 3 ist eine Kombination von je drei in axialer Richtung hintereinander angeordneten Schneckenelementen 1 dargestellt, wobei je drei Schneckenelemente $1a_1$, $1a_2$ und $1a_3$ auf einer ersten, durch die Längsachse 3a repräsentierten Welle und je drei Schneckenelemente $1b_1$, $1b_2$, $1b_3$ auf einer parallel dazu verlaufenden, durch die Längsachse 3b repräsentierten Welle angeordnet sind. Jedes einzelne Schneckenelement weist eine axiale Länge $L_1$, $L_2$ und $L_3$ auf, die sich zu der Gesamtlänge L einer durch diese Schneckenelementkombination beispielsweise gebildeten Mischzone aufaddieren.

Hinsichtlich ihrer Steigung bzw. Relativlage in Umfangsrichtung sind die Schneckenelemente so auf die Wellen drehfest aufgeschoben, daß der Schaufelkamm $17a_1$ durch den Schaufelkamm $17a_2$ mit gleicher Steigung und ohne Sprung an den Grenzen, d.h. stetig fortgesetzt wird. An diese beiden Schneckenelemente schließt sich ein drittes Schneckenelement $1a_3$ an, welches zwar mit seinem Schaufelkamm $17a_3$ den Schaufelkamm $17a_2$ fortsetzt, jedoch mit umgekehrter Steigung, d.h. in der Betrachtungsweise von Fig. 3, daß auf zwei links-steigende Schneckenelemente $1a_1$ und $1a_2$ ein rechts-steigendes Schneckenelement $1a_3$ folgt.

Auf der in Fig. 3 rechten, durch die Längsachse 3b repräsentierten Welle ist zunächst ein Schneckenelement $1b_1$ mit rechts-steigendem Schaufelkamm $17b_1$ vorgesehen, an welches sich ein Schneckenelement $1b_2$ mit links-steigendem Schaufelkamm $17b_2$ und an dieses den Schaufelkamm stetig fortsetzend ein weiteres Schneckenelement $1b_3$ mit links-steigendem Schaufelkamm $17b_3$ anschließt. Dementsprechend ist die Anordnung der Schneckenelemente auf der linken und rechten Seite bezogen auf die Mittellängsachse asymmetrisch.

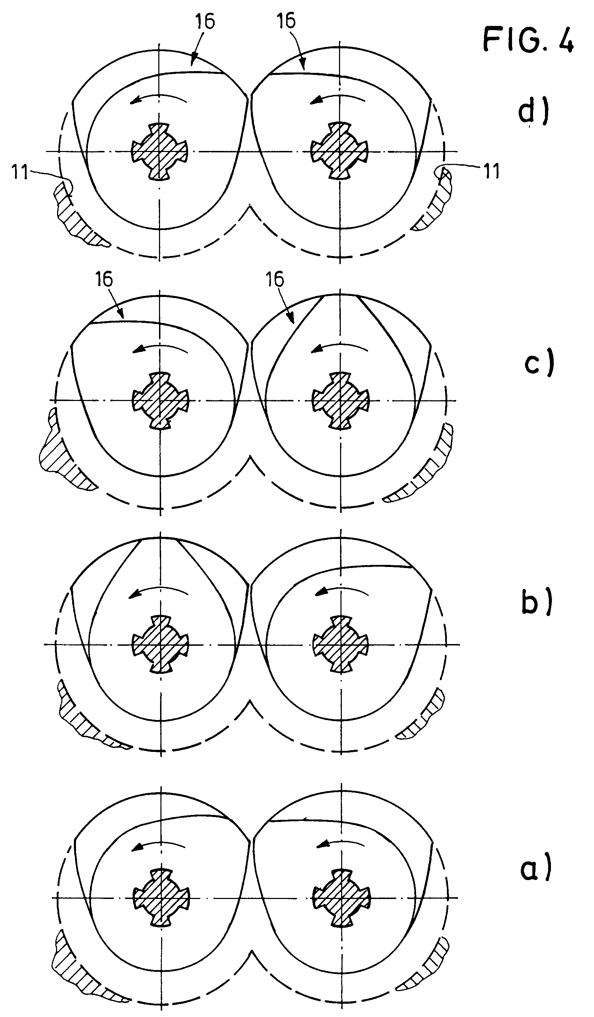

In Fig. 4a bis 4d ist veranschaulicht, welche Querschnittskonfigurationen sich längs der Linien a bis d in Fig. 3 ergeben, wobei insbesondere deutlich wird, daß die Schaufelstege 16 phasenweise wie selbstabstreifend wirken und über den größten Teil ihrer Bewegung in Umfangsrichtung mit geringem Spiel gegenüber der Gehäuseinnenwand 11 verlaufen, wohingegen in axialer Richtung trotzdem ein Freiraum verbleibt.

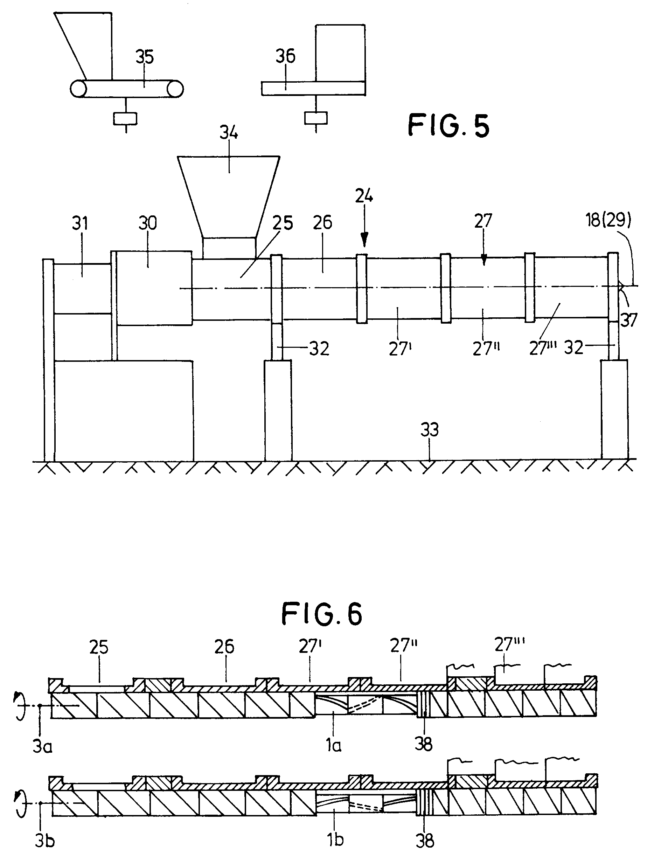

Schneckenelemente 1 der erfindungsgemäßen Art können in einer Schneckenmaschine eingesetzt werden, wie sie in Fig. 5 schematisch dargestellt ist. Diese Schneckenmaschine weist ein Gehäuse 24 auf, das aus mehreren Abschnitten, sogenannten Schüssen 25, 26, 27 besteht, die axial hintereinander angeordnet und aneinander geflanscht sind. Der Gehäuseschuss 27 umfaßt die Abschnitte 27', 27" und 27'''. In dem Gehäuse 24 sind zwei achsparallele Bohrungen 28, 29 ausgebildet, die einander nach Art einer liegenden Acht durchdringen. In dem Gehäuse 24 sind konzentrisch zu den Achsen der Bohrungen zwei Wellen 2 gelagert, die über ein Getriebe 30 von einem Motor 31 angetrieben werden. Das Gehäuse 24 und das Getriebe 30 sowie der Motor 31 sind über Ständer 32 gegenüber dem Boden 33 abgestützt. In dem ersten, als Einzugszone dienenden Gehäuseschuss 25 mündet ein Einlaßtrichter 34, in den zu verarbeitendes Material beispielsweise über eine als Bandwaage ausgebildete Dosiereinrichtung 35, beispielsweise für Granulat, und/oder eine als Dosierschnecke ausgebildete Dosiereinrichtung 36, beispielsweise für Pulver, zugeführt wird. Am Gehäuseschuss 27 ist ein Austrag 37 vorgesehen.

Der Antrieb der Wellen 2a bzw. 2b über den Motor 31 und das Getriebe 30 erfolgt gleichsinnig, d.h. die Wellen 2 drehen sich in die gleiche Richtung.

Die Mischzone mit der Schneckenelementkonfiguration, wie sie in Fig. 3 dargestellt ist, kann beispielsweise in dem Gehäuseschuß 27 angeordnet sein und sich an eine Einzugs- und Förderzone anschließen.

Die Abfolge der verschiedenen auf den Wellen 2 angeordneten Elemente in axialer Richtung ist für das nachfolgende Ausführungsbeispiel bzw. den nachfolgend beschriebenen Versuch in Fig. 5 schematisch dargestellt.

Für den nachfolgend beschriebenen Anwendungszweck können die Schneckenelemente alternativ zu der in Fig. 3 dargestellten Ausführungsform auch so angeordnet werden, daß die jeweils auf einer Welle sitzenden Elemente $1a_1$ und $1a_2$ die gleiche Steigung aufweisen, in Umfangsrichtung aufeinanderfolgend jeweils aber um 84° versetzt sind, wie in Fig. 6 dargestellt.

Als Knetmaschine wird eine Maschine vom Typ ZSK90 der Firma Werner & Pfleiderer mit gleichsinnig angetriebenen Wellen verwendet. Der Durchsatz einer derartigen Schneckenmaschine liegt bei 55 bis 330 kg/h bei 30 bis 180 UpM. Verarbeitet wird als Kunststoffgranulat bimodales HDPE, wobei die Plastifizierung und Homogenisierung dieses Materials mittels der erfindungsgemäßen Schneckenelemente erfolgt. Die Schneckenelemente 1a, 1b auf den Wellen 3a bzw. 3b sind so angeordnet, daß die Schneckenelemente 1a der Welle 3a in Förderrichtung, und die Schneckenelemente 1b der anderen Welle 3b in Gegenförderrichtung fördern. Im Ausführungsbeispiel schließt sich an die erfindungsgemäßen Schneckenelemente 1a, 1b eine Stauzone 38 an.

Es wurde gefunden, daß die erfindungsgemäße Schneckenanordnung auffällig niedrige Stippenzahlen (d.h. Inhomogenitäten oder Fisheyes) unter 200 Stück pro 60 m Folie bei kleiner Energieeinleitung (0,11 bis 0,21 kWh/kg) und Temperatur (184 bis 221°C) über den gesamten Fahrbereich erzeugt, d.h. die erfindungemäße Schneckenanordnung führt zu schonenden Bedingungen unter Vermeidung von Molekülabbau, so daß die Reißfestigkeit nicht reduziert wird. Konventionelle Knetblockschnecken ergeben von 1 000 bis 10 000 Stippen pro 60 m Folie bei höheren Energieeinleitungen und Temperaturen.

**Patentansprüche**

1. Schneckenelement für die Aufbereitung und/oder Verarbeitung von Kunststoffen oder Elastomeren in einer Schneckenmaschine mit gleichsinnig antreibbaren Schnecken-Wellen und zumindest einem Paar ineinander greifender Schneckenelemente, wobei jedes Schneckenelement einen Schneckensteg aufweist, dessen Hüllkurve sich radial mit konstantem Abstand von der jeweiligen Welle wegerstreckt und in Längsrichtung linear parallel zu der Längsachse der Welle verläuft, wobei ein radial außen liegender, gehäusenaher Abschnitt des Schneckensteges parallel zu der Gehäuseinnenwand mit geringem Spiel gegenüber dieser verläuft, dadurch gekennzeichnet, daß das Schneckenelement (1) eingängig ausgebildet ist und einen annähernd birnenförmigen Querschnitt aufweist, daß die Hüllkurve (8) einen dieser gegenüber schmäleren Schaufelsteg (16) derart einschließt, daß dessen Schaufelkamm (17) ausgehend von dem einen axialen Ende (18) des Schneckenelements (1) und der einen, ersten in Umfangsrichtung äußeren Seite (20) des gehäusenahen Abschnitts (9) der Hüllkurve (8) sich in Umfangsrichtung eines Winkels φ gesehen über einen Teil dieses gehäusenahen Abschnitts (9) der Hüllkurve (8) und in axialer Richtung hin auf die in Umfangsrichtung zweite äußere Seite (21) des gehäusenahen Abschnitts (9) der Hüllkurve (8) erstreckt.

2. Schneckenelement nach Anspruch 1, dadurch gekennzeichnet, daß die Steigung h in axialer Richtung des Schaufelkammes (17) in Umfangsrichtung entsprechend einem Winkel φ von ca. 90° ausgebildet ist.

3. Schneckenelement nach Anspruch 1, dadurch gekennzeichnet, daß die Breite $K_S$ des Schaufelkammes (17) in Umfangsrichtung des Winkels φ etwa 1/5 des gehäusenahen Abschnitts (9) der Hüllkurve (8) beträgt.

4. Schneckenelement nach Anspruch 1, dadurch gekennzeichnet, daß es auf die Welle (2) mittels einer Nut- und Federverbindung drehfest aufsteckbar ist.

5. Schneckenelement nach Anspruch 1, dadurch gekennzeichnet, daß die Nut- und Federverbindungen so ausgestaltet sind, daß die Schneckenelement (1) einer Welle (2) oder benachbarter Wellen (2) relativ zueinander in unterschiedlichen Winkelstellungen aufsteckbar sind.

6. Schneckenelement nach Anspruch 5, dadurch gekennzeichnet, daß benachbarte Schneckenelemente (1) auf benachbarte Wellen (2) so aufschiebbar sind, daß die Steigungsrichtung des Schaufelkammes (17) der benachbarten Schneckenelemente (1) entgegengesetzt (links-steigend bzw. rechts-steigend) ist.

7. Schneckenelement nach Anspruch 6, dadurch gekennzeichnet, daß die Steigung etwa das 3,33-fache oder etwa das 6,67-fache des Schnecken-Durchmessers beträgt.

8. Schneckenelement nach Anspruch 1, dadurch gekennzeichnet, daß die Länge L des Schneckenelements (1) etwa dem Schnecken-Durchmesser entspricht.

9. Schneckenwellenanordnung mit einer Mehrzahl von Schneckenelementen nach Anspruch 1, dadurch gekennzeichnet, daß nacheinander Schneckenelemente (1) mit unterschiedlicher Steigung des Schaufelkammes (17) angeordnet sind.

10. Schneckenwellenanordnung mit Schneckenelementen nach Anspruch 1, dadurch gekennzeichnet, daß zur Ausbildung einer asymmetrischen Mischzone auf einer ersten Welle (2) zwei Schneckenelemente (1) mit links-steigendem Schaufelkamm (17) und ein Schneckenelement (1) mit rechts-steigendem Schaufelkamm (17) und auf einer anderen Schneckenwelle (2) jeweils korrespondierend ein Schneckenelement (1) mit rechts-steigendem und zwei Schneckenelemente (1) mit links-steigendem Schaufelkamm (17) axial nacheinander angeordnet sind.

11. Schneckenwellenanordnung mit Schneckenelementen nach Anspruch 1, dadurch gekennzeichnet, daß die Schneckenelemente (1) in ihrer axialen Abfolge jeweils um einen bestimmten Winkelbetrag gegen das jeweils vorhergehende Schneckenelement versetzt sind.

12. Schneckenwellenanordnung mit Schneckenelementen nach Anspruch 1, dadurch gekennzeichnet, daß die Schneckenelemente (1a) der ersten Welle (2a) mit einer Steigung entsprechend der Förderrichtung und die Schnekkenelemente (1b) der zweiten Welle (2b) mit einer Steigung in Gegenförderrichtung ausgebildet sind.

**Claims**

1. Screw element for the conditioning and processing of plastics or elastomers in a screw-type extruding machine having screw shafts drivable to rotate in the same direction and at least one pair of meshing screw elements, each screw element having a land, of which the enveloping curve extends radially at a constant distance away from the respective shaft and, in the longitudinal direction, is of linear extension in parallel to the longitudinal axis of the shaft, a radially external screw land section near the housing running parallel to the inside wall of the housing with little clearance relative to the latter, <u>characterized in that</u> the screw element (1) is formed to be single-threaded and comprises an approximately pear-shaped cross-section and in that the enveloping curve (8) encloses a blade land (16) of reduced cross-sectional area referred to the enveloping curve (8), in that starting from the first axial end (18) of the screw element (1) and the first, in the circumferential direction external, end (20) of the section (9), near the housing, of the enveloping curve (8), the blade ridge (17) of the land (16), seen in the circumferential direction of an angle φ, extends along part of this section (9), near the housing, of the enveloping curve (8), and in that, in the axial direction, the blade ridge (17)) extends towards the second, in the circumferential direction external, end (21) of the section (9), near the housing, of the enveloping curve (8).

2. Screw element according to claim 1, characterized in that circumferentially, the pitch in the axial direction of the blade ridge (17) corresponds to an angle φ of approximately 90°.

3. Screw element according to claim 1, characterized in that the width KS of the blade ridge (17) in the circumferential direction of the angle φ amounts to about one fifth of the section (9), near the housing, of the enveloping curve (8).

4. Screw element according to claim 1, characterized in that it is slippable on the shaft (2) to be non-rotatable by means of a groove and key joint.

5. Screw element according to claim 1, characterized in that the groove and key joints are such that the screw elements (1) of one shaft (2) or of adjacent shafts (2) are placeable at different angular positions one in relation to the other.

6. Screw element according to claim 5, characterized in that adjacent screw elements (1) are slippable on adjacent shafts (2) so as to have opposite directions of pitch of the blade ridge (17) of the adjacent screw elements (1) (left-hand pitch and right-hand pitch, respectively).

7. Screw element according to claim 6, characterized in that the pitch amounts to approximately 3.33 or approximately 6.67 times the screw diameter.

8. Screw element according to claim 1, characterized in that the length L of the screw element (1) about corresponds to the screw diameter.

9. Screw shaft arrangement comprising a plurality of screw elements according to claim 1, characterized in that screw elements (1) of different pitch of the blade ridge (17) are disposed one after the other.

10. Screw shaft arrangement comprising screw elements according to claim 1, characterized in that for the formation of an asymmetric mixing zone, two screw elements (1) with a blade ridge (17) of left-hand pitch and one screw element (1) with a blade ridge (18) of right-hand pitch are disposed in axial sequence on a first shaft (2), and that one screw element (1) with a blade ridge (17) of right-hand pitch and two screw elements (1) with a blade ridge (17) of left-hand pitch are arranged axially one after the other by corresponding association on a second screw shaft (2).

11. Screw shaft arrangement comprising screw elements according to claim 1, characterized in that in their axial sequence, the screw elements (1) are offset by a certain angular measure in relation to each preceding screw element.

12. Screw shaft arrangement comprising screw elements according to claim 1, characterized in that the screw elements (1a) of the first shaft (2a) have a pitch corresponding to the conveying direction and in that the screw elements (1b) of the second shaft (2b) have a pitch of a direction opposite to the conveying direction.

**Revendications**

1. Elément de vis sans fin pour la préparation et/ou le traitement de matières plastiques ou d'élastomères dans une machine à vis sans fin comportant des arbres de vis sans fin pouvant être entraînés dans le même sens et au moins un couple d'éléments de vis sans fin engrenant l'un avec l'autre, chaque élément de vis sans fin possédant un corps dont la courbe enveloppe est située radialement à une distance constante de l'arbre respectif et s'étend linéairement dans la direction longitudinale, parallèlement à l'axe longitudinal de l'arbre, tandis qu'une partie, qui est située radialement à l'extérieur et est proche du carter, du corps de la vis sans fin s'étend parallèlement à la paroi intérieure du carter en en étant séparée par un faible jeu, caractérisé en ce que l'élément de vis sans fin (1) comporte un seul filet et possède une section transversale approximativement en forme de poire, que la courbe enveloppe (8) entoure un corps de filet (16) plus étroit que cette courbe de telle sorte que l'arête de filet (17) de ce corps s'étend, à partir d'une extrémité axiale (18) de l'élément de vis sans fin (1) et d'un premier côté (20), qui est extérieur dans la direction circonférentielle, de la partie (9) de la courbe enveloppe (8), qui est proche du carter, s'étend, lorsqu'on regarde dans la direction circonférentielle

d'un angle $\phi$, sur une portion de cette partie (9), proche du carter, de la courbe enveloppe (8) et, dans la direction axiale, jusqu'au second côté (21) extérieur dans la direction circonférentielle, de la partie (9) de la courbe enveloppe (8), qui est proche du carter.

2. Elément de vis sans fin selon la revendication 1, caractérisé en ce que le pas h dans la direction axiale de l'arête de filet (17) est formé de manière à correspondre, dans la direction circonférentielle, à un angle $\phi$ d'environ 90°.

3. Elément de vis sans fin selon la revendication 1, caractérisé en ce que la largeur $K_S$ de l'arête de filet (17) est égale, dans la direction circonférentielle de l'angle $\phi$, à environ 1/5 de la partie (9), proche du carter, de la courbe enveloppe (8).

4. Elément de vis sans fin selon la revendication 1, caractérisé en ce que l'arbre (2) peut être emmanché d'une manière bloquée en rotation à l'aide d'un système de liaison à rainure et languette.

5. Elément de vis sans fin selon la revendication 1, caractérisé en ce que les éléments de liaison à rainure et languette sont agencés de telle sorte que les éléments de vis sans fin (1) d'un arbre (2) ou d'arbres voisins (2) peuvent être emmanchés les uns par rapport aux autres dans des positions angulaires différentes.

6. Elément de vis sans fin selon la revendication 5, caractérisé en ce que des éléments de vis sans fin (1) voisins peuvent être emmanchés sur des arbres voisins (2) de telle sorte que les sens des pas des arêtes de filet (17) des éléments de vis voisins (1) sont opposés (montant à gauche et montant à droite).

7. Elément de vis sans fin selon la revendication 6, caractérisé en ce que le pas est égal approximativement à 3,33 ou à environ 6,67 fois le diamètre de la vis sans fin.

8. Elément de vis sans fin selon la revendication 1, caractérisé en ce que la longueur L de l'élément de vis sans fin (1) correspond approximativement au diamètre de la vis sans fin.

9. Dispositif à arbres à vis sans fin comportant une multiplicité de vis sans fin selon la revendication 1, caractérisé en ce que des éléments de vis sans fin (1), dont les arêtes de filet (17) présentent des pas différents, sont disposés les uns derrière les autres.

10. Dispositif à arbres à vis sans fin comportant des éléments de vis sans fin selon la revendication 1, caractérisé en ce que, pour la formation d'une zone de mélange asymétrique, deux éléments de vis sans fin (1), dont l'arête de filet (17) tourne à gauche et un élément de vis sans fin (1) dont l'arête de filet (17) tourne à droite, sont disposés sur un premier arbre (2), et d'une manière respectivement correspondante un élément de vis sans fin (1) dont l'arête de filet (17) tourne à droite et deux éléments de vis sans fin (1), dont l'arête de filet (17) tourne à gauche, sont disposés sur un autre arbre à vis sans fin (1), et ce axialement successivement.

11. Dispositif à arbres à vis sans fin comportant des éléments de vis sans fin selon la revendication 1, caractérisé en ce que la succession axiale des éléments de vis sans fin (1) est décalée respectivement d'une valeur angulaire déterminée par rapport à l'élément de vis sans fin respectivement précédent.

12. Dispositif à arbres à vis sans fin comportant des éléments de vis sans fin selon la revendication 1, caractérisé en ce que les éléments de vis sans fin (1a) du premier arbre (2a) sont réalisés avec un pas correspondant à la direction d'entraînement et les éléments de vis sans fin (1b) du second arbre (2b) sont agencés avec un pas dans la direction d'entraînement opposée.

FIG. 1

FIG. 2

FIG.3

$1a_3$

$17b_3$

$17a_3$

d

$1a_2$

$17a_2$ $17b_2$ $1b_3$

L3

c

$1a_1$

$17a_1$ $1b_2$ L2

$17b_1$ b

$1b_1$ L1 L

a

3a 3b

a

EP 0 641 640 B1

10

FIG. 4

d)

c)

b)

a)

FIG. 5

FIG. 6